# EUROPEAN PATENT APPLICATION

(11) **EP 1 676 792 A1**
(43) Date of publication of application: **05.07.2006**
(21) Application number: 04736796.6
(22) Date of filing: 14.06.2004
(51) Int. Cl.: B65D 90/00, B65D 85/68, B60P 3/07

(54) **RACK FOR FREIGHT**

(30) Priority: 10.10.2003 JP 2003351621
(71) Applicant: Rokko Engineering Co., Ltd., Kobe-shi, Hyogo 650-0004 (JP)
(72) Inventor: OMUTA, Mamoru,c/o Rokko Engineering Co., Ltd., Kobe-shi, Hyogo 6500004 (JP)
(74) Representative: Newstead, Michael John
(86) International application number: PCT/JP2004/008665
(87) International publication number: WO 2005/035397

(57) **Abstract**

A freight rack capable of reducing the mechanical load on a container and lighter in weight. An automobile rack 1, which is disposed in a container 3 carrying an automobile 2, can reinforce the container 3 from the inside. The freight rack 1 includes a base member 10 movable longitudinally in the container 3 together with the automobile 2 loaded thereon and a vertical bracing member 20 which is brought into contact with the inside upper part of the container 3 to exert an upward force on the container 3.

## Description

### TECHNICAL FIELD

The present invention relates to a freight rack for freight transportation using a container, which is loaded with freight and disposed in the container. The freight rack is suitable for transporting heavy freight such as automobiles, furniture, household electrical appliances, office automation equipment, production machines and their components.

### BACKGROUND OF THE INVENTION

In order to transport containerized freight efficiently, a freight support means called a rack may be used. The rack generally has a shelf-like part allowing freight to be put one above another and a base member provided with wheels, rolls or the like. The shelf-like part enables to load as much freight as possible in the container for efficient transportation. The base member with wheels or the like enables to carry freight into a box type container having a ceiling board without using a crane or the like.

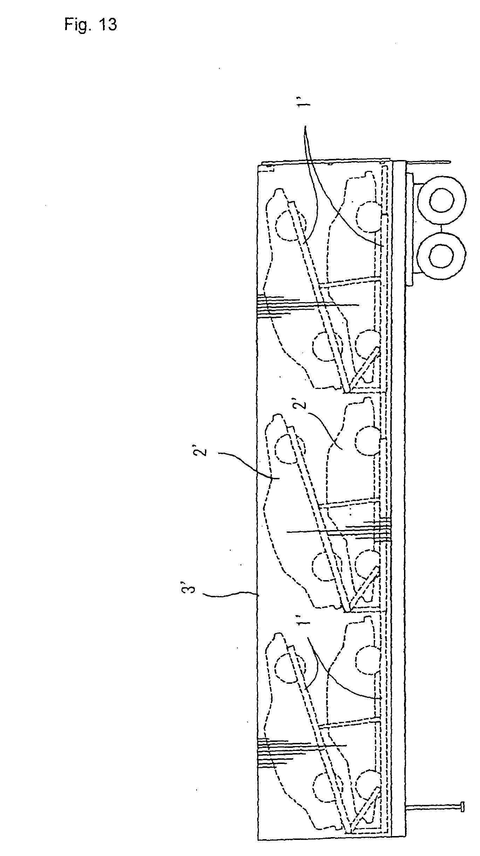

The gazette No. JPA H09-507188 discloses an automobile rack for transporting automobiles using a container. The rack of the gazette is outlined in Fig. 13, also showing the container containing automobiles using the rack. As mentioned above, a rack 1' has a shelf-like part and automobiles 2' are put one above another in a container 3' .

The conventional automobile racks including the embodiment shown in Fig. 13 (of the gazette) have the following problems a) and b):
a) A heavy mechanical load acts on the container when automobiles put therein, so that considerable care must be paid for the transportation. The reason the mechanical load is heavy is the container contains both considerably heavy freight of a plurality of automobiles and the rack for carrying them. Moreover the container is subjected to various external forces, rocks, vibrations or the like when transported by a truck or a ship, or loaded in or unloaded from those transportation means (for example, the container may vibrate and twist when traveling along a curve in a highway). Furthermore, recently many containers use a monocoque construction the whole of which takes charge of strength with changing the shape, instead of a framed construction having high rigidity. That may cause a larger deformation of the container. Considering all these mechanical loads, the number of automobiles put in each container should be reduced. But this may result in substantial lowering of transportation efficiency.
b) The rack has a tendency to be given sufficient rigidity, so that the rack may increase in weight and become hard to deal with. The reason the rack needs rigidity is to prevent automobiles on the rack from bumping against other things in the rocking container. The container may displace largely, particularly during transportation, loading or unloading. Even in these cases, movement (relative movement to the container) of automobiles should be controlled sufficiently. Further, increase in weight of the rack due to higher rigidity may lead to further increase of the mechanical load on the container as described in the above paragraph a).

### SUMMARY OF THE INVENTION

The present invention has been made in view of the foregoing and provides a new freight rack which is capable of reducing the mechanical load on a container and lighter in weight.

A freight rack of the present invention, which is disposed in a container (for freight transportation), is composed so that the rack can reinforce the container from the inside. The freight rack is suitable for transporting all kinds of freight, in particular, comparatively heavy freight such as automobiles, furniture, household electrical appliances, office automation equipment, production machines and their components. The rack is not limited by whether a shelf-like part is included.

This freight rack has the composition which enables to be loaded with freight in the container and reinforce the container, thereby having the following advantage: As the rack is capable of reinforcing the container, it is possible to reduce the mechanical load on the container. This makes the container transportation more stable and more reliable and can raise the transportation efficiency through the increase in the number of freight loaded in each container and the improvement of the speed and promptness in transportation and handling of the container.

The freight rack preferably includes a base member movable longitudinally in the container, together with freight loaded thereon (for example, a base member provided with wheels, rollers or the like for smooth travel in the longitudinal direction on the bottom board of the container), and a vertical bracing member which is brought into contact with the inside upper part of the container to exert an upward force on the container.

This freight rack has the following advantages:
i) Including the base member, the freight rack makes it easy to carry heavy freight into the container. That is because if the freight is loaded on the base member movable as mentioned above, it can be carried into the box type container having a ceiling board without using a crane or the like.
ii) Including the vertical bracing member, the freight rack can effectively reinforce the container from the inside using the vertical bracing member. That is because when the base member is put on the bottom board of the container and the vertical bracing member is brought into contact with the inside upper part of the container so as to provide an upward force, the vertical bracing member can exert a constraining force on each of the upper and lower members of the container, thereby restricting the vertical stress or deformation of the beam or ceiling board of the container. Consequently it is advantageous to use the freight rack in stacked containers.
iii) Moreover the vertical bracing member works to restrict the displacement of the rack itself. That is because when the base member is put on the bottom board of the container and the vertical bracing member is brought into contact with the inside upper part of the container so as to provide an upward force, the bracing member and the base member also, are exerted the constraining force from the container, thereby the deformation and displacement of the rack itself is restricted. In addition, this constraining force fixes the position and prevents the rack from changing the vertical, longitudinal and lateral position, besides restricting the vertical deformation and displacement. For the reason of these features, the freight such as an automobile is prevented from undesirably bumping against other things in the rocking container.
iv) As the displacement of the rack is restricted by the constraining force of the container, the rack itself is not required to be excessively rigid and allowed to be lighter in weight. The lighter rack can lessen the mechanical load on the container, thereby improving the stability, reliability and promptness of the container transportation.

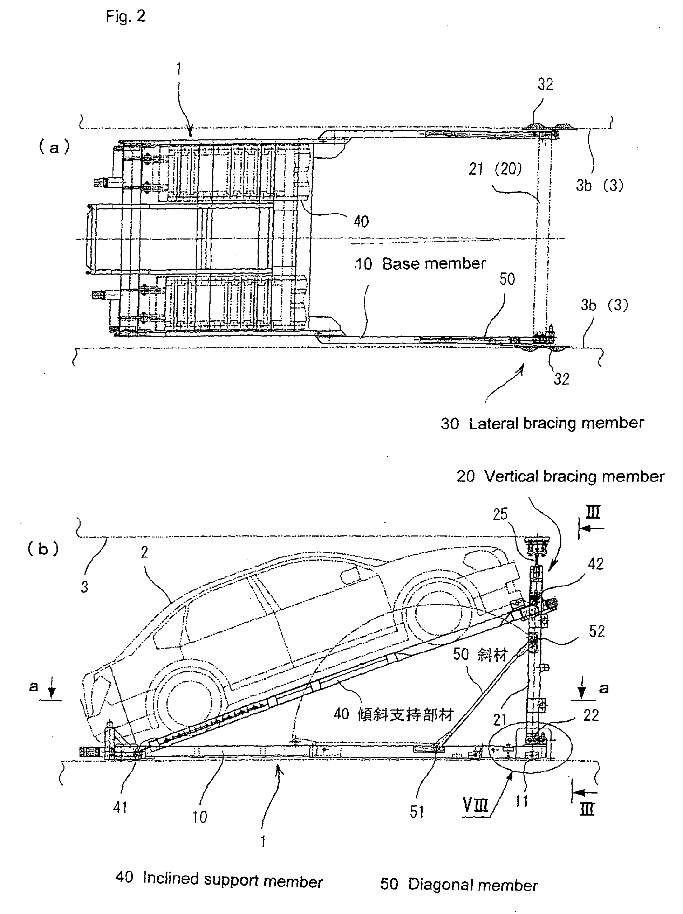

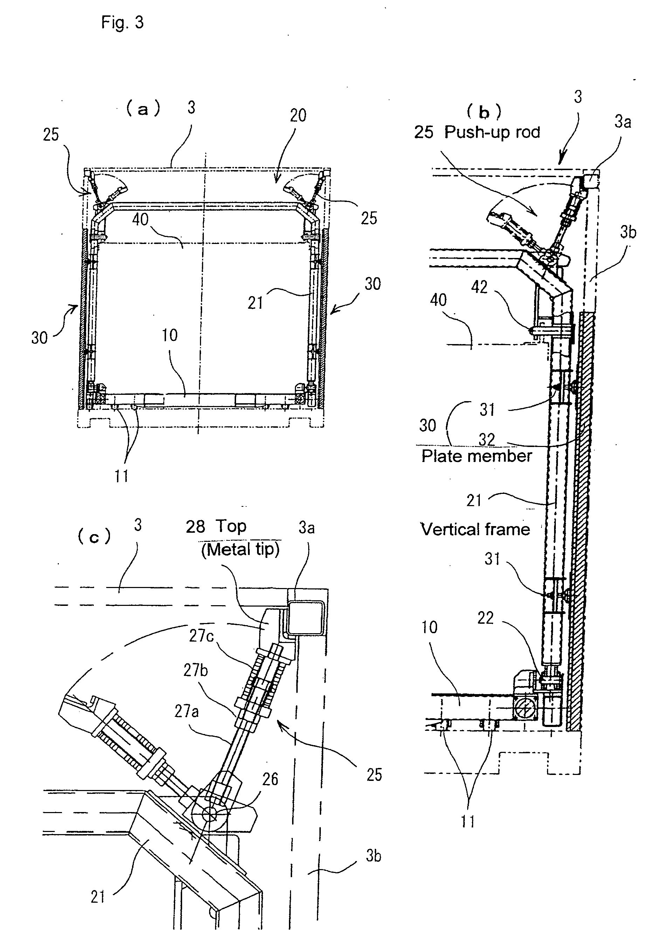

Preferably the vertical bracing member of the freight rack of the invention is adjustable in vertical length so that the top of which is brought into contact with each of the right and left corners of the inside upper part of the container. Figs. 2 and 3 show one embodiment of this rack, where the vertical bracing member 20 is composed by connecting the upper part of a vertical portal frame 21 with a push-up rod 25 adjustable in length by means of screw. The top (a metal tip 28 of the push-up rod) is brought into contact with two surfaces (a horizontal face and a vertical face) of a frame member (a top rail 3a) at each of the right and left corners of the inside upper part of the container 3.

After this freight rack is carried into the container, the length of each upturned vertical bracing member should be adjusted so that the top of the bracing member is brought into contact with each of the right and left corners of the inside upper part of the container with a proper contact force. In this state, the vertical bracing member exerts an upward force on the upper part of the container, as described above, thereby reinforcing the container from the inside and restricting the deformation and displacement of the rack itself.

As the vertical bracing member is adjustable in length, the rack is useful in various containers of different height. Moreover as the top of the bracing member is brought into contact with each of the right and left corners of the inside upper part of the container, advantageously the contact position is prevented from slipping even under the rocking or the like.

Further the freight rack preferably includes a base member movable longitudinally in the container, together with freight loaded thereon (for example, a base member provided with wheels, rollers or the like for smooth travel in the longitudinal direction on the bottom board of the container), and a lateral bracing member which is brought into contact with each of the right and left insides of the container to exert an outward force on the container.

This freight rack has the following advantages:
i) Including the base member, the freight rack makes it easy to carry heavy freight into the container as well as the rack described above.
ii) Including the lateral bracing member, the freight rack can reinforce the container from the inside using the lateral bracing member. That is because when the lateral bracing member is brought into contact with each of the right and left insides of the container so as to provide an outward bracing force, the lateral bracing member can exert a constraining force on each right and left members of the container, thereby restricting the horizontal deformation or the like of the container.
iii) Moreover, the lateral bracing member can restrict the displacement of the rack. When the lateral bracing member is brought into contact with each of the right and left insides of the container so as to provide an outward bracing force, the lateral bracing member is subjected to the constraining force from the container, thereby restricting the deformation and displacement of the rack itself. In addition, this constraining force fixes the position and prevents the rack from changing the lateral and longitudinal position. For the reason of these features, the freight such as an automobile is effectively prevented from undesirably bumping against other things in the rocking container.
iv) As the displacement of the rack is restricted as mentioned above, the rack itself is not required to be excessively rigid and allowed to be lighter in weight. The lighter rack can lessen the mechanical load on the container, thereby improving the stability, reliability and promptness of the container transportation.

More preferably the lateral bracing member of the freight rack is adjustable in lateral length so that a convex section of a plate member fixed to the top of the lateral bracing member is brought into contact with the inside concave section of the corrugated side panel of the container. One embodiment is shown in Figs. 2(a) and 3 as a lateral bracing member 30. The top of a laterally adjustable push-out rod 31 is fitted with a plate member 32, and the convex section of the plate member 32 is brought into contact with the concave section (as seen from the inside of the container) of the corrugated side panel 3b of the container 3. This rack uses the corrugated steel panel or the like, provided on the side of the container 3 for strengthening.

After this freight rack is carried into the container, the lateral length of the lateral bracing member should be adjusted so that the top plate member is brought into contact with the inside of the corrugated side panel of the container. When the convex section of the plate member is brought into contact with the concave section of the inside of the corrugated panel and the contact force is properly adjusted, the container is reinforced from the inside and the deformation and displacement of the rack itself is restricted as described above.

As the lateral bracing member is adjustable in length, the rack is useful in various containers of different width. Moreover as the convex top section of the lateral bracing member is brought into contact with the inside concave section of the corrugated side panel of the container, the lateral bracing member is prevented from slipping out of the contact position even when rocked, for example.

In particular the freight rack preferably includes an inclined support member which can carry freight and be disposed in the inclined state with one side (either the front or the rear side, for example) lifted. An example of inclined support member used in this rack is shown in Fig. 2 by the reference numeral 40. One of the front and rear (namely, longitudinal) end portions of the inclined support member 40 is pinned to the base member 10 and the other end portion is lifted so as to be inclined as illustrated.

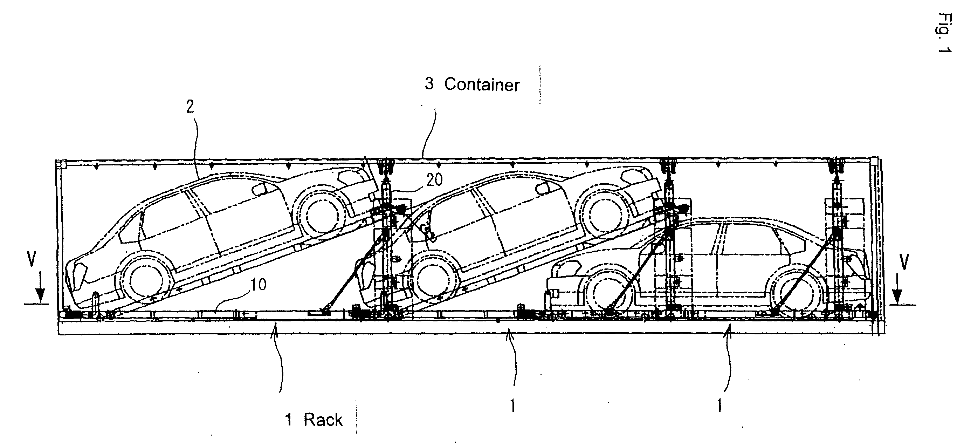

As the rack with the inclined support member like this enables to put freight both on and under the inclined support member, more freight is allowed to be put in the container of limited capacity, as shown in Fig. 1. In other words, the rack in-use has a shelf-like structure.

The vertical bracing member of the freight rack is preferably composed so that:
- it is pinned to the base member (coupled rotatable around a pin: coupled by a link assembly);
- it is raised upright on the base member when connected with a diagonal member as a cross bracing; and
- it is laid down on the base member together with the diagonal member
when uncoupled with the diagonal member.

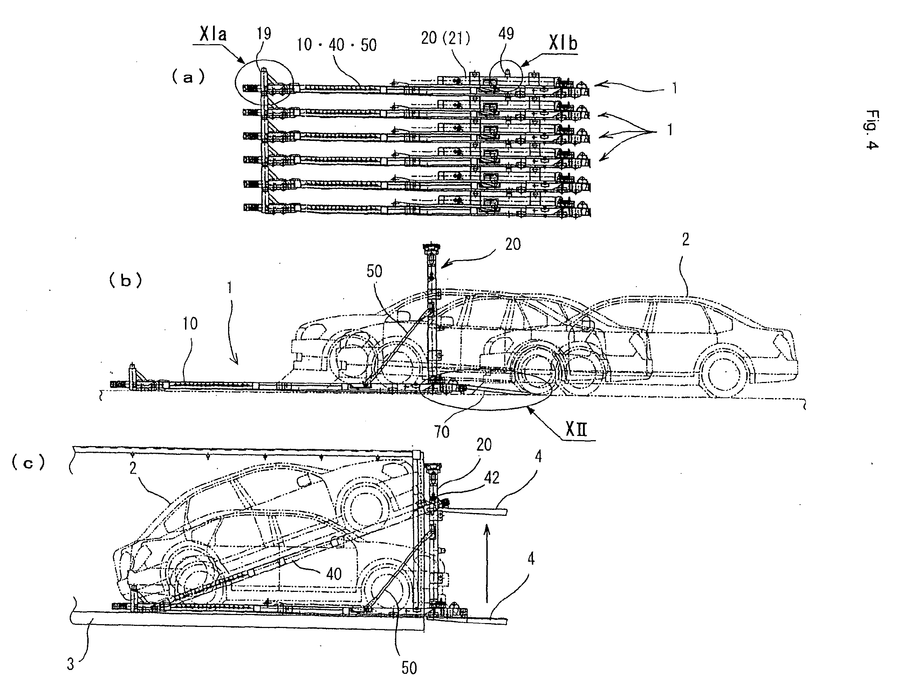

This freight rack enables to (arbitrarily) switch the vertical bracing member between the standing position with the diagonal member connected thereto and the lying position with the diagonal member. For example, as shown in Figs. 4(a)-4(c), the vertical bracing member 20 is freely switched between the standing position (Fig. 4(b) or 4(c)), and the lying position folded down on the base member 10 (Fig. 4(a)). Therefore, unused rack (such as a returned rack for next transportation) allows to be compactly folded and stacked one above the other, so that fewer containers are required for transporting them to the destination.

Though pinned to the base member, the vertical bracing member can provide a sufficiently strong upward force because of the connection with the diagonal member as a cross bracing, as described above.

The vertical bracing member of the freight rack can be composed so that:
- it is raised upright on the base member when connected to the base member by pins having different axial centers; and
- it is laid down on the base member when the connection including pins
having different axial centers is relieved.

When connected by pins with different axial centers, the vertical bracing member can stand upright on the base member, even though the diagonal member is not connected. When the connection including pins with different axial centers is relieved by reducing the number of pins, for example, the vertical bracing member allows to be laid down on the base member. As a result, this freight rack, also, allows to be folded compactly when out of use, so that fewer containers are required for transporting them to the destination.

In particular the freight rack is preferably composed so that the base member is connectable to another base member of the adjacent rack (freight rack) in the container.

When two or more such freight racks are disposed in the container, the adjacent racks connected with each other constrain their positional relationship. Therefore the racks are held to their locations more stably. As mentioned above, the freight rack exerts force on the container through the vertical bracing member or the lateral bracing member, thereby constrained by the container and prevented from deformation and displacement. This rack is further constrained by the adjacent rack, so that the deformation and displacement are prevented more effectively. Therefore the freight is more effectively prevented from disadvantageously bumping against other things in the rocking container.

In addition to the above feature, the freight rack is preferably composed so that:
- a plurality of freight racks are disposed in the container in the state that the rear end (the end in the near side of the container's entrance) of the base member is positioned at the back of the front end (the end in the far side of the container's entrance) of the base member of another freight rack; and
- the rear part (except the part near the front end) of the base member is attached with a coupling frame which is selective in positioning (adjusted) in the longitudinal direction for constraining the front end of the base member of another rack to connect the base members with each other.

The term "front" ("front part", "front end") of the present description and claims means the side far from the carry-in entrance of the container (the deep part of the container). On the other hand, the term "rear" ("rear part", "rear end") means the side near the carry-in entrance of the container.

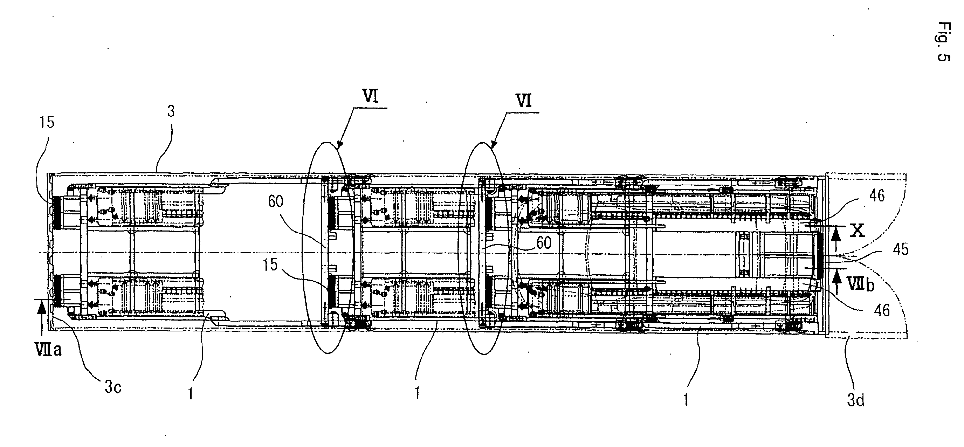

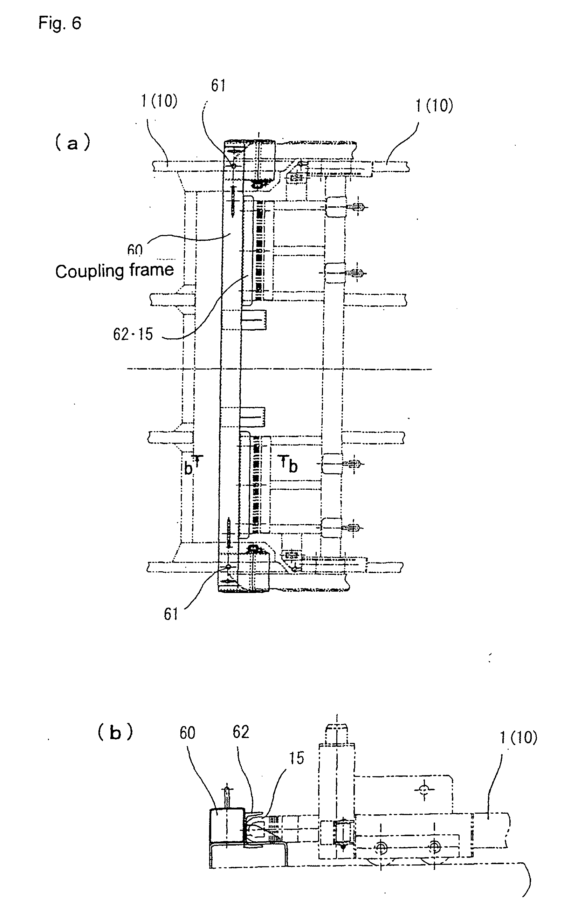

One embodiment of the freight rack having the above features is shown in Figs. 5 and 6, where the rack 1 includes a coupling frame 60. The rear end (the end at the right-hand of the drawing) of the base member 10 of the front rack 1 is positioned at the back of the front end of the base member 10 of another rack 1. The coupling frame 60 is attached to the rear part of the base member 10 of the rack 1 at the position selected in the longitudinal direction (in the lateral direction of the drawings), thereby constraining the front end of the base member 10 of the adjacent rack 1.

As the base members are connected with each other by the coupling frame, the freight racks can keep the relative positional relationship, thereby restricted to move. Consequently the freight is effectively prevented from disadvantageously bumping against other things in the container.

As the coupling frame is attached to the rear part of the base member of the rack at the longitudinally selected position, the longitudinal relative position of the racks connected by the frame is adjustable. As a result, the total length of the connected racks in the container (the length from the front end of the foremost rack to the rear end of the backmost rack) can be made equal to the inside length of the container. That is nothing but the racks can be entirely contained in the container and properly disposed so as to leave no allowance for the racks to move in the container. The longitudinally adjustable coupling frame enables to determine the interval between the adjacent racks according to the dimensions of the freight to be loaded.

With respect to the above mentioned rack having an inclined support member disposed inclined, it is particularly advantageous to dispose a plurality of racks with the rear end of the base member positioned at the back of the front end of another rack's base member. This is because the rack used in the manner as shown in Fig. 1 enables to carry much freight (such as automobiles).

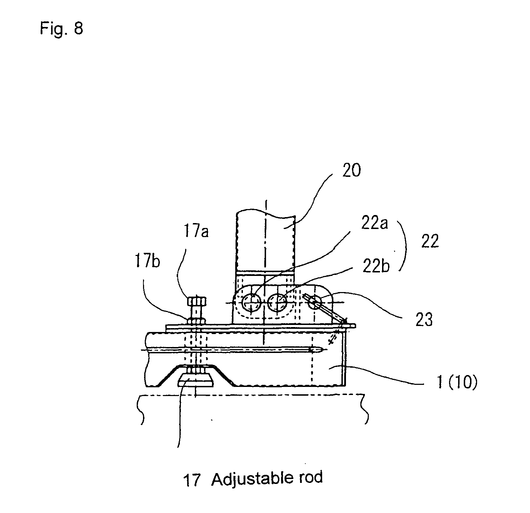

The base member of the freight rack preferably includes wheels (including rollers or the like) for the longitudinal movement and an adjustable rod (the member adjustable in extension length by a screw or the like: the reference numeral 17 of Fig. 8, for example) which can be extended downward to the ground.

This freight rack, as the base member having wheels, makes it easy to carry freight into (and out of) the container. Besides, this rack has the adjustable rod, so the movement by wheels is surely held up if necessary. The reason is that when the adjustable rod is extended downward to the floor of the container, the rod can lift wheels off the floor and support the weight of the rack, so that the rack is prevented from moving. As the movement of the rack can be stopped when needed, the freight loading and unloading is easily done.

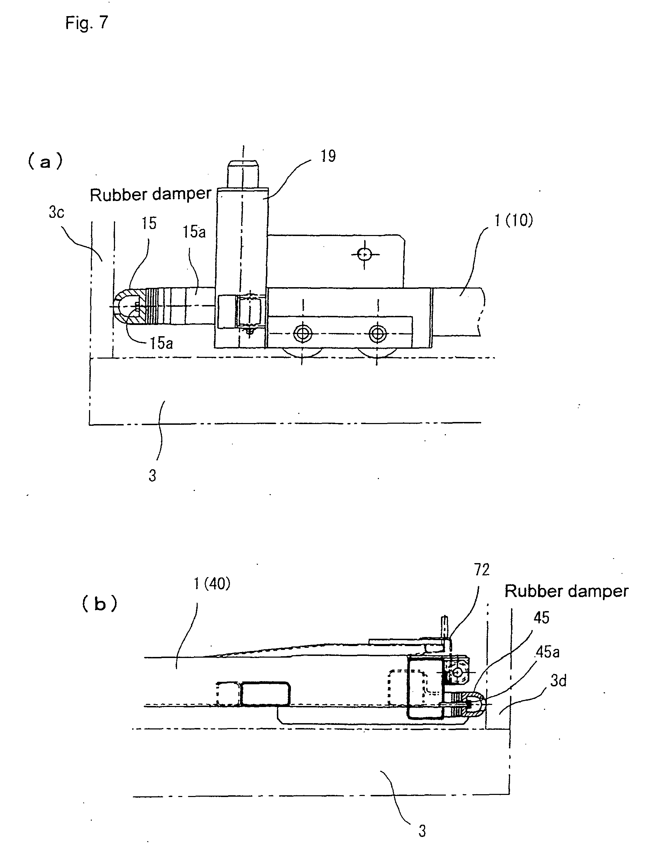

The freight rack preferably includes a rubber damper on the front or rear end of the base member. One embodiment of this rubber damper is shown by the reference numeral 15 of Fig. 7(a) or the reference numeral 45 of Fig. 7(b).

The rubber damper can reduce the shock of contact between the racks (which are subjected to come in contact with each other particularly when two or more racks are successively carried into the container). The rubber damper also can effectively fix the freight racks (or prevent the racks from lifted) in the container by a large frictional force generated when the total length of the racks is made equal to the inside length of the container to bring the rubber damper into contact with the wall at the front or rear end of the container.

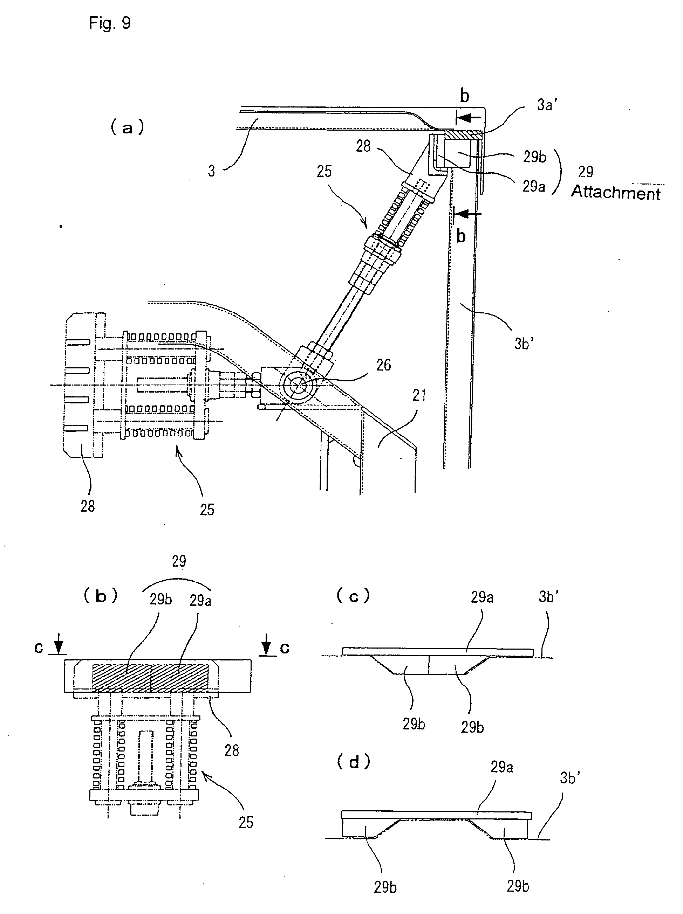

The vertical bracing member of the freight rack is preferably composed so that the top of the vertical bracing member is provided with an attachment which is selective in positioning and has a shape to fit into each of the right and left corners of the inside upper part of the container. One embodiment of this attachment is shown by the reference numeral 29 of Fig. 9.

In general, different model containers have different-shaped inside upper corners with which the top of the vertical bracing member is brought into contact. But in this freight rack, the attachment with a shape to fit into each inside upper corner of the container is mounted on the top of the vertical bracing member. Therefore the vertical bracing member can function effectively even if the rack is put in a different model container. Moreover as the attachment is selective in positioning, advantageously the rack can be used when the shape of the inside upper corners of the container is different by location.

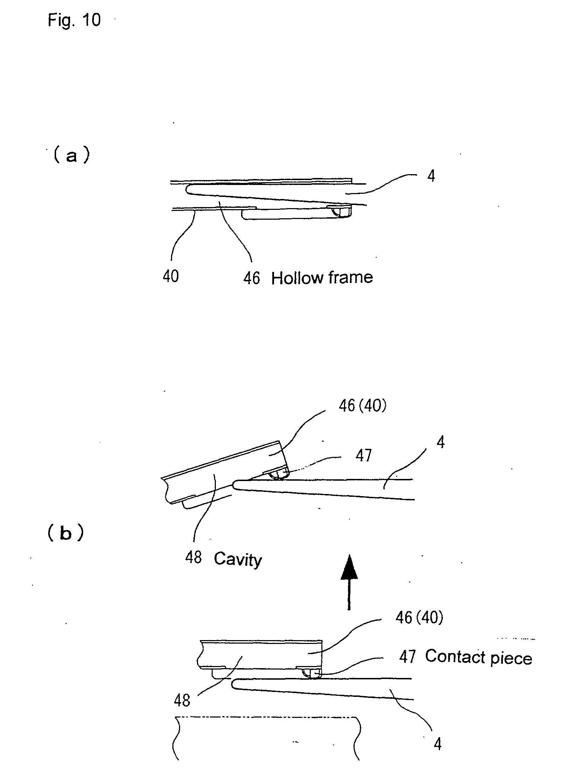

The inclined support member preferably includes a contact piece and a cavity so that a forklift can lift and lower the rear part of the inclined support member. The contact piece is placed at the lower part near the rear end of the inclined support member and allows the upper surface of the fork of the forklift to come in contact with the contact piece for supporting, and the cavity is disposed in front of the contact piece and has a space extending upward. As embodiment of the contact piece and the cavity here, Fig. 10(b) shows a contact piece 47 projecting downward and a cavity 48 disposed in front of the contact piece 47. It is preferable that the contact piece is made of a high-strength member to prevent deformation due to the freight load or other loads.

Provided with the contact piece and the cavity, the inclined support member is smoothly lifted and lowered by the fork (the elevating prong) of the forklift. The reason is that although the fork moves up and down keeping almost parallel to the ground while the inclined support member changes the angle to the ground according to the height of the fork, the inclined support member can keep in contact with the fork through the identified contact piece during moving up and down, as shown in Fig. 10(b), for example. Contact through the identified contact piece prevents the change of the contact point which may cause unstable (slippery) contact or variable inclining speed. That means the inclined support member is smoothly lifted and lowered (or inclined).

Additionally, the inclined support member can be lifted and lowered by the forklift, which means that there is no need to prepare a specific operating device for the inclined support member and that elevating operation of the member is easy. Namely, the rack is not required to carry a hydraulic jack, a hydraulic pump or the like in order to lift and lower the inclined support member which can be elevated in a constant, smooth manner by the forklift available in every harbor. The rack with no hydraulic jack or the like has another advantage of being lighter in weight.

The freight rack preferably includes a flattened hollow frame which is provided on the inclined support member or the base member and has a depth for inserting the fork of a forklift up to the basis so that the whole of the freight rack is lifted (and transferred) by the forklift. The depth of the hollow frame is preferably about 2 m, for example, however, more than 1 m. The hollow frame is preferably as flat as more than about 20 cm in width and less than about 15 cm (or less than one-fifth of the depth) in height so that the fork inserted into the hollow frame may not leave much space above and under the fork. As one embodiment of this hollow frame, Fig. 10(a) shows a hollow frame 46 made of square iron pipe.

When a forklift of a sufficient capacity inserts the fork to lift this freight rack, the whole freight rack can be lifted and transferred by the forklift. Since the fork is inserted into the deep, flat hollow frame up to the basis for lifting, the hollow frame comes in contact with both the top and the basis of the fork, thereby the inclined support member or the base member including this hollow frame is lifted by the forklift keeping almost horizontal posture. The inclined support member and the base member should be previously connected with each other by a pin or the like so that the angle between them is prevented from changing. The use of a forklift for lifting and transferring the whole rack makes it easier and more prompt to carry the rack into the container.

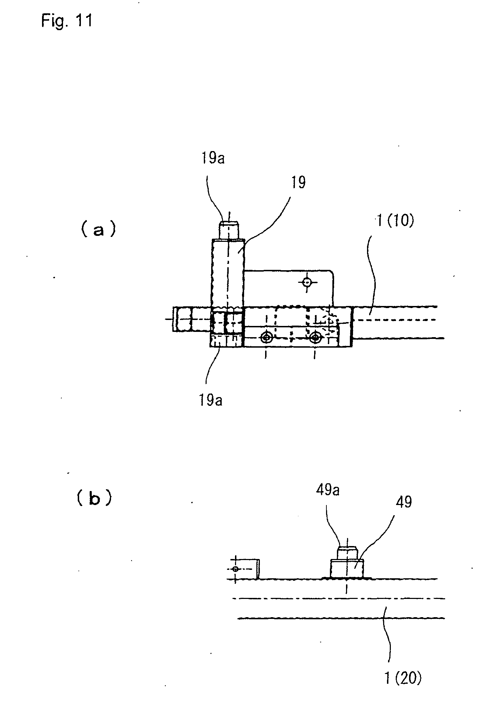

The vertical bracing member, which is composed so as to be able to lie down, is preferably includes a stacking post projecting upward or downward while the vertical bracing member is laid down on the base member. The post is preferably provided on the base member or the vertical bracing member or the both. Fig. 11 shows posts 19 and 49 as embodiment of this stacking post.

As mentioned above, the rack including the vertical bracing member capable of being laid down can be folded down into a compact form suitable for return or the like. But the rack further including the stacking post can be folded compactly and stacked orderly and stably. This makes it easy to carry the rack in and out of the container when sending it back, for example.

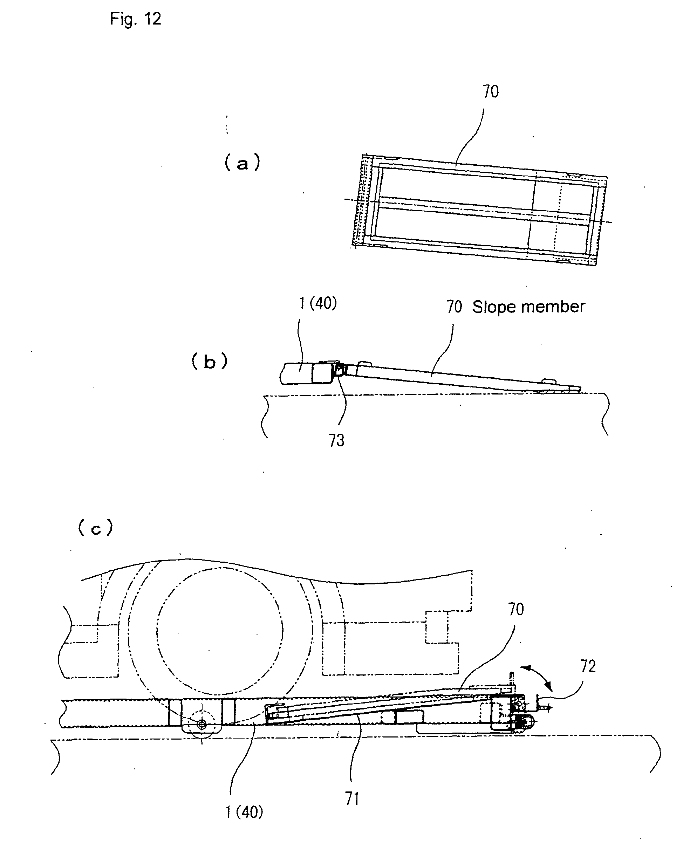

The freight rack preferably includes a slope member which is removably stored near the rear end of the freight rack, which is connectable to the rear end of the freight rack for easier freight transferring between the ground and the freight rack. In Figs. 12(a)-12(c), a rack 1 is shown as embodiment of this freight rack including a slope member 70 which is connectable to the rear end of the inclined support member 40 as shown in Figs. 12(a) and 12(b). The incline support member 40 can store the slope member 70 in the rear part thereof, as shown in Fig. 12(c).

It is desirable that the slope member is connected to the rear end of the rack when loading freight on the base member or the inclined support member (before lifted) of the freight rack. By using the slope member for clearing the difference in level between the ground and the rack, the freight is smoothly carried into the rack, whether the freight is carried into the rack by a truck or self-propelled like an automobile.

This freight rack removably stores this slope member near the rear end thereof, which can be connected to the rear end of the freight rack. As the freight rack is accompanied by the slope member in such a manner, it is easy to pull out the identified slope member from the rack to use also when carrying out the freight from the rack at the destination (and when carrying other freight in again). Accordingly, at a harbor or other places for container-handling, this freight rack removes the burden of preparing a proper slope for every freight loading and unloading.

It is preferable to use the freight rack for carrying automobiles as freight.

Automobiles are generally transported in large numbers using containers, however they are heavy freight to give a larger burden on the container and require considerably rigid rack, and therefore more efficient containerized freight transportation and easier handling racks are desired. This freight rack can properly satisfy these technical requests and greatly improve the containerized freight transportation. In case a compact car is loaded as an automobile, it is preferable to dispose the inclined support member as shown in Fig. 1, so that the container can contain more cars.

### BRIEF DESCRIPTION OF DRAWINGS

Fig. 1 is a side elevation view (in cross section) of a container 3 which contains a plurality of automobiles 2 as freight carried on a plurality of racks 1, showing one embodiment according to the present invention;
Figs. 2(a) and 2(b) show the rack 1 put in the container 3: Fig. 2(a) is a plan view (on arrow a-a of Fig. 2(b)) and Fig. 2(b) is a side view;
Figs. 3(a)-3(c) show the rack 1 viewed on arrow III-III of Fig. 2(b): Fig. 3 (a) is a total front view, Fig. 3(b) is a detailed drawing of the right-hand part of Fig. 3(a), and Fig. 3(c) is a detailed drawing of the upper right-hand part of Fig. 3(a);
Figs. 4(a)-4(c) are side views showing the use of the rack 1: Fig. 4(a) shows the unused rack 1, Fig. 4(b) shows the rack 1 in the process of loading the automobile 2, and Fig. 4(c) shows the automobile 2 and an inclined support member 40 in the process of inclining;
Fig. 5 is a plan view of the inside of the container 3 on arrow V-V of Fig. 1;
Figs. 6(a) and 6(b) show a coupling frame 60: Fig. 6(a) is a detailed drawing of part VI of Fig. 5, and Fig. 6(b) is a cross sectional view taken along line b-b of Fig. 6(a);
Figs. 7(a) and 7(b) show the front end and the rear end of the rack 1: Fig. 7(a) is a cross sectional view taken along line VIIa of Fig. 5, and Fig. 7(b) is a cross sectional view taken along line VIIb of Fig. 5;
Fig. 8 is a detailed drawing of part VIII of Fig. 2(b);
Figs. 9(a)-9(d) show the use of a push-up rod 25 and an attachment 29 for the container's inside upper corner shaped differently from that of Fig. 3: Fig. 9(a) is a total front view, Fig. 9(b) is a view on arrow b-b of Fig. 9(a), Fig. 9(c) is a view on arrow c-c of Fig. 9(b), and Fig. 9(d) shows the use of the attachment 29 different from that of Fig. 9(c);
Figs. 10(a) and 10(b) are explanatory drawings of operation using a forklift: Fig. 10(a) is a cross sectional view taken along line X of Fig. 5, showing the structure of a hollow frame 46 in the inclined support member 40, Fig. 10(b) shows the structure of a contact piece 47 near the hollow frame 46, and a hollow portion 48, and the use of the same;
Figs. 11 (a) and 11 (b) show the detail structure of the rack 1: Fig. 11 (a) is a magnified drawing of part XIa of Fig. 4(a), and Fig. 11 (b) is a magnified drawing of part XIb of Fig. 4(a);
Figs. 12(a)-12(c) are detailed drawings of part XII of Fig. 4(b), showing a slope member 70; and
Fig. 13 is a schematic side view showing a conventional automobile rack and a container containing automobiles using the rack.

### BEST MODES FOR CARRING OUT THE INVENTION

Figs. 1-12 show embodiment for carrying out the present invention.

An automobile rack 1 shown in Fig. 1 or other drawings is carried into a container 3 while carrying and supporting an automobile 2 (a compact car) and can keep the state of loading and supporting while transporting the container by a ship, vehicle or the like. The rack 1 is composed of steel members such as section steel as shown in Figs. 2 and 3.

The rack 1 is provided with a base member 10 so that the rack 1 can longitudinally travel on the floor (bottom board) of the container 3. The base member 10 is provided with a rotatable wheel (roller) 11 at several locations under the base member 10 so as to be easily carried into the container 3 in the above mentioned manner. Therefore a worker can push and carry the rack 1 loaded with the automobile 2 into the container 3.

The base member 10 has a vertical bracing member 20 connected to one part thereof and a diagonal member 50 connected to the other part thereof. The vertical bracing member 20 is connected to the base member 10 by a pin 22 so as to pivot in a vertical plane. The diagonal member 50 is connected to the base member 10 by a pin 51 in the similar manner. The top of the diagonal member 50 is removably connected to the vertical bracing member 20 by a pin 52. When the vertical bracing member 20 is raised up on the base member 10 and connected to the diagonal member 50 by the pin 52, the vertical bracing member 20 will stand vertically and stably.

The vertical bracing member 20 is composed of a port-shaped vertical frame 21 connected to the base member 10, and a push-up rod 25 mounted on the upper part of the frame 21. The push-up rod 25, as shown in Fig. 3(c), includes a rod body 27a with a threaded portion, a compression spring member 27c connected to the rod body 27a at a selective position by two nuts 27b, and a metal tip (top) 28 attached to the top of the spring member 27c. The base portion of the push-up rod 25 is connected to the vertical frame 21 by a coupling pin 26. The coupling pin 26 is positioned slightly inside the lateral end in the upper part of the vertical frame 21. The metal tip 28 is pressed against the inside corner (and both sides containing the corner) of a top rail (frame member) 3a disposed longitudinally at each upper right and left corners of the container 3. If the spring constant of the spring member 27c is properly set and the total length of the push-up rod 25 is adjusted by changing the position of the nut 27b to provide a proper pressing force, the push-up rod 25 can keep pressing the top rail 3a upwardly (slightly diagonal direction including outward force) and stably even though the container 3 is forced to change the cross sectional shape to a rhombus or a rhomboid.

The vertical frame 21 of the vertical bracing member 20 is also attached with a lateral bracing member 30, as shown in Figs. 3(a) and 3(b). A plurality of push rods 31 are attached to the vertical frame 21 so that each position (the projecting length) is adjustable in the lateral direction (the width direction of the container, that is, the right and left direction of Fig. 3). Each end of the push rod 31 is attached with a plate member 32. The plate member 32 is provided on each of the right and left sides of the rack 1 and has a vertically extended concave and convex on each outer surface, as shown in Fig. 2(a). The number of the convex is two or so for each plate member 32 as illustrated, and each convex is formed to fit into the concave section (viewed from the inside) of a corrugated panel 3b consisting the side board of the container 3. Thereby, if (the convex part of) the plate member 32 is pressed against (the concave section of) the corrugated panel 3b of the container 2 by properly adjusting the position of the push rod 31, the automobile rack 1 is constrained by the container 3 (through the corrugated panel 3b). As a result, the rack is fixed in the lateral and longitudinal position, and the vertical bracing member 20 is held vertical more certainly.

The base member 10 attached with the vertical bracing member 20 and the diagonal member 50 is further attached with an inclined support member 40 as shown in Fig. 2(b). The inclined support member 40 is connected by a pin 41 to the base member 10 at the portion near one end in the longitudinal direction. The inclined support member is usually parallel to the almost same plane as the base member 10, however, inclined over the length when lifted at the other end. It is possible to put the automobile 2 on the upper surface of the inclined support member 40. While the inclined support member 40 is inclined, the portion near the lifted end is kept lifted by a supporting pin 42 provided on the vertical frame 21 of the vertical bracing member 20.

This automobile rack 1 is used according to the following points 1)-5). Hereinafter, an exemplary use of the rack 1 will be described with reference to Figs. 4(a)-4(c):
1) When out of use, the vertical bracing member 20 (the vertical frame 21), the inclined support member 40 and the diagonal member 50 are folded down on the place almost overlapping with the base member 10, so that the whole rack 1 takes an almost flat shape, as shown in Fig. 4(a). In this state, it is possible to compactly stack many racks 1 one above another as illustrated.
   The rack 1 is provided with an upward stacking post 19 attached on each side (in width direction) near the front end (the left-hand of Fig. 4) of the base member 10, and similarly a stacking post 49 is attached on each side of the vertical bracing member 20, thereby enabling the orderly, stable stacking. The top of the stacking post 19 is provided with a projection 19a, as shown in Fig. 11(a). The projection 19a can fit into a lower part hole 19b of the post 19 in the upward stacked rack 1. Similarly the top of the stacking post 49 on the vertical bracing member 20 is provided with a projection 49a which can fit into a hole (not illustrated) of the upward stacked rack 1. At the time of stacking, as shown in Fig. 4(a), the lateral bracing member 30 of Fig. 3 should be previously unfastened from the vertical frame 21 and turned around.
2) When the automobile 2 is carried into the container 3, the vertical bracing member 20 should be raised up on the base member 10 using the diagonal member 50, as shown in Fig. 4(b), before the automobile 2 is driven on the rack 1. At this time, the rack 1 is preferably disposed near the entrance of the container 3.
   For smoother transferring of the automobile 2 into or out of the rack1, it is convenient to span the end of the rack 1 and the ground with a slope member 70, as shown in Fig. 4(b). The slope member 70 is allowed to be stored in the inclined support member 40 of the rack 1, as shown in Fig. 12(c). The inclined support member 40 is provided with a storing space 71 where the slope member 70 is usually stored. The storing space 71 has a hinged cover 72 at the end, which is closed when the support member 70 is stored. Before the automobile 2 is driven into or out of the rack 1, the slope member 70 should be pull out with the cover 72 open, and then hung on the hook 73 on the rear end of the inclined support member 40 (before inclined), as shown in Fig. 12(b). Fig. 12(a) is a plan view showing the slope member 70 hung on the hook 73.
3) After the automobile is driven into the rack 1 placed near the entrance of the container 3, one side of the inclined support member 40 is lifted by a forklift, as shown in Fig. 4(c), and kept in the state (kept inclined with one side lifted) by the supporting pin 42. As the wheels (tires) of the automobile 2 in the rack 1 are in contact with the upper surface of the inclined support member 40, the forklift can lift and incline the inclined support member 40 together with the automobile 2 loaded thereon by pressing the fork against the front lower surface of the inclined support member 40 and lifting along the arrow illustrated. A forklift is available in every harbor. For simplification and weight reduction of the structure of the rack 1, it is quite advantageous to use a forklift to lift the inclined support member 40 because there is no need for installation of lifting equipment (such as a hydraulic jack, or a hydraulic pump or the like).
   With respect to the above procedure to place the rack 1 near the container 3 and to incline the inclined support member 40 in the manner as described above, the rack 1 is provided with the following devices. First, as shown in Fig. 10(a) (and Fig. 5), the inclined support member 40 is provided with two hollow steel frames 46 which are long in the longitudinal direction of the rack 1 and parallel to each other. Each hollow frame 46 is more than 2 m in depth and the inside dimensions of the cross section is about 15 cm in height and about 20 cm in width. Therefore a large-sized forklift can insert the fork 4 up to the basis, as shown in Fig. 10(a), without leaving much space between the fork 4 and the inside of the hollow frame 46. So if the forklift inserts the fork 4 into the hollow frame 46 as shown in Fig. 10(a) while the inclined support member 40 and the base member 10 are connected with each other by a pin 23 or the like as shown in Fig. 8, the forklift can lift up the whole rack 1 and transfer it to the desired location. The use of a forklift of a sufficient capacity enables to lift up the rack 1 loaded with the automobile 2 and carry it near the entrance of the container 3.
   Secondly, as shown in Fig. 10(b), a contact piece 47 is integrated by welding with the place near the rear end of the inclined support member 40 and under the hollow frame 46, and a cavity 48 with an upward admission space is provided in front of the contact piece 46, so as to make the use of the forklift easy for inclining the inclined support member 40. The contact piece 47 is made of a square steel rod and a curved steel member adjoining the front of the square rod, and has sufficient strength not to be deformed under the load of the inclined support member 40 and the automobile 2. As the contact piece 47 has the curved front surface (the closer to the front the surface is, the closer to the vertical the angle is), the area coming in contact with the fork 4 is kept constant and the contact point shifts smoothly in a limited area while the fork 4 continues to lift to incline the inclined support member 40. As the contact piece 47 has the high mechanical strength and is integrated with the hollow frame 46, the hollow frame 46 is prevented from deformation when the rack 1 is lifted up by the fork 4, as shown in Fig. 10(a).
4) Pushed by a worker, the rack 1 loaded with the automobile 2 is carried into the deep part in the container 3. It is easy to transfer the rack 1 together with the automobile 2 because the base member 10 of the rack 1 is provided with wheels 11 as described above (see Fig. 3(a), for example). After the rack 1 is carried into place in the container 3, the vertical bracing member 20 and the lateral bracing member 30 should be respectively extended to press against the upper part and each side of the container 3, in order to reinforce the container 3 and prevent the deformation of the rack 1 itself. As the base member 10 of the rack 1 is provided with an adjustable rod 17 as shown in Fig. 8, the rack 1 is fixed when the wheels 11 are lifted up by the rod 17 extended to the floor or the ground. The adjustable rod 17 has a threaded portion which is screwed in the threaded hole of the base member 10 and has a contact plate at the bottom end thereof. The downward extension length is variable by turning the screw head 17a provided on the top of the adjustable rod 7 and fixed by a locknut 17b. The adjustable rod 17 can fix the rack 1 not only in the container 3 but also on the ground and other locations.
5) By repeating the procedure 1)-4) (some racks 1 are used with the inclined support member 40 not inclined), more than two automobiles 2 are contained in the container 3. As each rack 1 reinforces the container 3 while prevented from displacement due to the rocking container 3 or the like, the container 3 and the automobiles 2 are transported more stably and more efficiently.

Each rack 1 is attached with a rubber damper 15 at the front end as shown in Fig. 7(a), and a rubber damper 45 at the rear end as shown in Fig. 7(b). The rubber dampers 15 and 45 can reduce the shock caused by the rack 1 touching the container 3 or other racks 1. Each of the rubber dampers 15 and 45 is a hollow rubber having D-shaped cross section as illustrated, and attached to the front end of the base member 10 by a bolt 15a and to the rear end of the inclined support member 40 by a bolt 45a respectively. The bolts 15a and 45a are operated through the hole provided on the belly portion of letter "D".

As shown in Fig. 1 or 5, the racks 1 are contained in the container 3 in the manner such that the rear end of the base member 10 of the adjacent rack 1 ahead is positioned at the back of the front end of the base member 10 of the adjacent rack 1 behind. Even in this state, the automobile 2 is prevented from bumping against other automobiles 2 or the racks 1 because some automobiles 2 are inclined by the inclined support members 40.

The two longitudinally adjoining racks 1 are connected with each other by a coupling frame 60 illustrated in Figs. 5, 6(a) and 6(b). The coupling frame 60 includes a pin 61 (or other thing such as a bolt) for fixing the frame 60 to the base member 10 of the rack 1 ahead, and also a frame 62 for constraining the vertical relative displacement by coming into contact with the rubber damper 15 of the rack 1 behind. The base member 10 has longitudinally disposed holes for inserting the pin 61, so that the coupling frame 60 is fixed to the base member 10 at the selected position. The use of this coupling frame 60 has the following advantages:
a) As the racks 2 are connected with each other, the longitudinal and vertical displacement of each rack 1 is remarkably restricted. Therefore the automobile 2 is effectively prevented from bumping against other things during transportation.
b) It is possible to properly determine the positional relationship of each rack 1 in a longitudinal direction according to the dimensions of the automobile 2 and the container 3.
c) It is possible to make the length from the front end of the foremost rack 1 to the rear end of the backmost rack 1 equal to the inside dimensions of the container 3. Therefore, as shown in Figs. 7(a) and 7(b), all the racks 1 are contained in the state such that the front rubber damper 15 of the foremost rack 1 is pressed against the front wall 3c of the container 3 and the rear rubber damper 45 of the backmost rack 1 is pressed against the (closed) entrance door 3d of the container 3. When the rubber dampers 15 and 45 are pressed against the walls 3c and 3d of the container 3, the friction by the rubber acts to prevent the end of the rack 1 from being lifted off the container 3, so the automobiles 2 are transported quite stably.

The freight rack 1 explained above may have the following alternatives in the detail structures. First, the vertical bracing member 20 can be raised up on the base member 10 without using the diagonal member 50 of the drawings such as Fig. 2(b). The vertical bracing member 20 can be firmly raised up on the base member 10 using pins 22(22a and 22b) with different axial centers, as shown in Fig. 8, which have the sufficient mechanical strength and are much spaced from each other. In order to lay down the vertical bracing member on the base member 10 for stacking the rack 1, as shown in Fig. 4(a) for example, it is enough to pull out either of the pins 22a or 22b (22b in Fig. 8) and then incline the vertical bracing member 20.

Secondly, the metal tip 28 of the push-up rod 25 in the vertical bracing member 20, illustrated in Fig. 3, can be attached with a proper attachment 29 as shown in Fig. 9. Not all the containers 3 have the top rail 3a with the shape as illustrated in Fig. 3, at the inside upper right and left corners. It is not seldom that the container 3 has a thin flat bar 3a' as shown in Fig. 9, for example. In order to allow the push-up rod 25 to work even in such a case, the metal tip 28 is provided with the attachment 29 of selected form and size at the selected position. In the embodiment of Figs. 9(a)-9(c), the attachment 29 consisting of a plate member 29a and a trapezoidal block 29b is provided so that the attachment 29 is pressed against the inside corner of the flat bar 3a' in the high position and the convex section is fitted into the concave section of the corrugated panel 3b', the side wall of the container 3. It is preferable that the trapezoidal block 29b is arranged according to the part of the corrugated panel 3b' where the metal tip 28 comes in contact with.

### INDUSTRIAL APPLICABILITY

When heavy freight such as an automobile is transported using a container, the freight rack enables efficient, stable and reliable freight transportation even in case the container is subjected to the vibration or the like. That is, the present invention is particularly useful in the distribution industry.

## Claims

1. A freight rack disposed in a container, wherein the rack has the capability of reinforcing the container from the inside.

2. The freight rack according to claim 1, comprising:
a base member movable longitudinally in the container, together with freight loaded thereon; and
a vertical bracing member which is brought into contact with the inside upper part of the container to exert an upward force on the container.

3. The freight rack according to claim 2, wherein said vertical bracing member is adjustable in vertical length so that the top of the vertical bracing member is brought into contact with each of the right and left corners of the inside upper part of the container.

4. The freight rack according to one of claims 1-3, comprising:
a base member movable longitudinally in the container, together with freight loaded thereon; and
a lateral bracing member which is brought into contact with each of the right and left insides of the container to exert an outward force on the container.

5. The freight rack according to claim 4, wherein said lateral bracing member is adjustable in lateral length so that a convex section of a plate member fixed to the top of the lateral bracing member is brought into contact with the inside concave section of the corrugated side panel of the container.

6. The freight rack according to one of claims 2-5, comprising an inclined support member which can carry freight and be disposed in the inclined state with one side lifted.

7. The freight rack according to claim 2 or 3, wherein said vertical bracing member is pinned to said base member and wherein the vertical bracing member is raised upright on the base member when connected with a diagonal member as a cross bracing, and is laid down on the base member together with said diagonal member when uncoupled with the diagonal member.

8. The freight rack according to claim 2 or 3, wherein said-vertical bracing member is raised upright on said base member when connected to the base member by pins having different axial centers, and laid down on the base member when the connection including pins having different axial centers is relieved.

9. The freight rack according to one of claims 2-8, wherein said freight rack is constructed so that said base member is connectable to another base member of the adjacent freight rack in the container.

10. The freight rack according to claim 9, wherein a plurality of said freight racks are disposed in the container in the state that the rear end of the base member is positioned at the back of the front end of the base member of another freight rack, and wherein the rear part of the base member is attached with a coupling frame which is selective in positioning in the longitudinal direction and constrains the front end of the base member of another freight rack to connect the base members with each other.

11. The freight rack according to one of claims 2-10, wherein said base member includes wheels for the longitudinal movement and an adjustable rod which can be extended downward to the ground.

12. The freight rack according to one of claims 2-11, comprising a rubber damper on the front or rear end of said base member.

13. The freight rack according to claim 3, wherein the top of said vertical bracing member is provided with an attachment which is selective in positioning and has the shape to fit into each of the right and left corners of the inside upper part of the container.

14. The freight rack according to claim 6, wherein said inclined support member is provided with a contact piece and a cavity so that a forklift is allowed to lift and lower the rear part of the inclined support member, the contact piece being placed at the lower part near the rear end of the inclined support member and allowing the upper surface of the fork of the forklift to come in contact with the contact piece for supporting, and the cavity being disposed in front of the contact piece and having a space extending upward.

15. The freight rack according to one of claims 2-14, comprising a flattened hollow frame which is provided on the inclined support member or the base member and has a depth for inserting the fork of a forklift up to the basis so that the whole of the freight rack can be lifted by means of the forklift.

16. The freight rack according to claim 7 or 8, comprising a stacking post projecting upward or downward while the vertical bracing member is laid down on the base member.

17. The freight rack according to one of claims 1-16, wherein a slope member is removably stored near the rear end of the freight rack, which is connectable to the rear end of the freight rack for easier freight transferring between the ground and the freight rack.

18. The freight rack according to one of claims 1-17, wherein the freight rack carries an automobile as the freight.
